Europäisches Patentamt

European Patent Office

Office européen des brevets

(19)

(11) Numéro de publication: **0 078 727**
**B1**

# (12) FASCICULE DE BREVET EUROPEEN

(45) Date de publication du fascicule du brevet:
02.10.85

(21) Numéro de dépôt: 82401939.2

(22) Date de dépôt: 22.10.82

(51) Int. Cl.⁴: **B 01 D 33/10,** B 01 D 35/12,
B 01 D 29/02, B 01 D 29/32,
B 01 D 29/14, B 01 D 37/04

(54) **Dispositif de filtration d'un liquide contenant des impuretés diverses.**

(30) Priorité: 28.10.81 FR 8120547

(43) Date de publication de la demande:
11.05.83 Bulletin 83/19

(45) Mention de la délivrance du brevet:
02.10.85 Bulletin 85/40

(84) Etats contractants désignés:
DE FR GB

(56) Documents cités:
DE - C - 339 005
FR - A - 1 585 649
FR - A - 2 203 663
FR - A - 2 477 029
US - A - 2 737 508

(73) Titulaire: SOCIETE NATIONALE D'ETUDE ET DE
CONSTRUCTION DE MOTEURS D'AVIATION,
"S.N.E.C.M.A.", 2 Boulevard Victor, F-75015 Paris (FR)

(72) Inventeur: Silhouette, Jean-Max Marie, 54, Bd Aristide
Briand, F-77000 Melun (FR)

(74) Mandataire: Moinat, François, S.N.E.C.M.A. Service des
Brevets Boîte Postale 81, F-91003 Evry Cedex (FR)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit
être formée par écrit et motivée. Elle n'est réputée formée qu'après paiement de la taxe d'opposition (Art. 99(1) Convention sur le
brevet européen).

BUNDESDRUCKEREI BERLIN

## Description

La présente invention concerne un dispositif de filtration d'un liquide contenant des impuretés diverses, en particulier pour la filtration du carburant destiné à un moteur d'avion.

On connaît déjà pour ces applications des dispositifs de filtration par emploi d'un tambour tournant.

Le brevet français n° 1 543 530 décrit un dispositif de filtrage d'un liquide, qui comporte un filtre en forme de cloche à paroi latérale perforée, qui est entraînée en rotation lente autour de son axe vertical, notamment par un moteur hydraulique alimenté à partir du liquide épuré et refoulé par une pompe; le liquide à filtrer pénètre à l'intérieur de la cloche tournante à travers les perforations de sa paroi latérale, puis le liquide filtré est évacué sensiblement dans la direction axiale, à travers la base ouverte de ladite cloche. Une rampe verticale est prévue pour pulvériser une fraction du liquide, épuré et refoulé par le pompe, sur en élément vertical de la face interne de la paroi latérale de la cloche, de façon à renvoyer les impuretés qui ont été déposées sur la face externe du filtre, dans la masse de liquide pollué qui l'entoure. Le fonctionnement de ce dispositif de filtrage doit être relativement peu satisfaisant, dans la mesure où les impuretés retenues par le filtre sont renvoyées dans le liquide pollué, dont elles accroissent la teneur en impuretés, avant que ledit liquide pollué, et enrichi en impuretés, ne traverse le filtre. L'efficacité de ce dispositif de filtrage antérieurement connu est donc tout à fait douteuse et oblige en tout état de cause à des nettoyages fréquents.

Le brevet français n° 1 528 213 décrit un dispositif de filtration pour les liquides contenant des impuretés diverses; ce dispositif comporte une lance, qui projette le liquide à filtrer en éventail, de bas en haut, contre la paroi latérale, filtrante, d'un tambour tournant autour d'un axe horizontal; le liquide filtré est évacué dans la direction axiale, à travers l'une des bases du tambour tournant. Différents modes de nettoyage de la surface latérale filtrante du tambour tournant sont prévus; ce nettoyage peut être obtenu notamment en faisant refluer une partie du liquide contenu dans le tambour à travers sa paroi latérale filtrante, grâce à une dépression créée à l'extérieur du tambour par un ajutage approprié, s'étendant sur toute sa longueur. Cette disposition évite que les impuretés, détachées de la surface latérale du tambour ne se retrouvent mélangées avec le liquide à filtrer. Cependant, dans le mode de fonctionnement de ce dispositif antérieurement connu, selon lequel le tambour filtrant est entraîné dans une rotation continue, l'ajutage mentionné ne recouvre la paroi latérale dudit tambour que sur une très faible largeur angulaire probablement insuffisante. Quant au mode de fonctionnement de ce dispositif de filtrage antérieurement connu, qui prévoit de ne mettre le tambour en rotation qu'à intervalles réguliers, et pour des phases de nettoyage, pendant chacune desquelles l'opération de filtration est interrompue, cette disposition est généralement inapplicable pour la filtration du carburant alimentant un moteur d'avion, puisqu'elle entraînerait des interruptions de l'alimentation en carburant, certes courtes, mais d'autant plus fréquentes que le carburant est plus chargé en impuretés, ou à tout le moins un alourdissement de la maintenance au sol.

Le dispositif de filtration d'un liquide contenant des impuretés diverses, en particulier pour la filtration du carburant destiné à un moteur d'avion, selon la présente invention, comprend un carter fixe comportant une conduite d'arrivée radiale, une conduite d'évacuation axiale et un orifice d'évacuation radiale — un tambour à paroi latérale filtrante, monté tournant dans ledit carter fixe, qui l'enveloppe, en ménageant une chambre sensiblement annulaire autour de sa paroi latérale, des palettes radiales étant montées coulissantes dans la paroi latérale dudit tambour tournant, de manière que leurs bords externes soient appliqués de façon étanche contre la paroi interne du carter fixe, de manière à délimiter, sur la paroi latérale dudit tambour, au moins une zone active de filtrage, constituant une entrée dudit tambour, et au moins une zone de nettoyage, constituant une première sortie radiale dudit tambour, les parties intérieures du tambour tournant, qui se trouvent dans les secteurs cylindriques respectifs des zones de filtrage et de nettoyage de sa paroi latérale communiquant librement entre elles, ledit tambour comportant un tourillon inférieur à sa base, constituant une seconde sortie, axiale, principale du tambour et des moyens moteurs étant prévus pour faire tourner le tambour de façon que les différentes parties de sa paroi latérale servent, alternativement et périodiquement, de zone de filtrage et de zone de nettoyage.

Le dispositif de filtration selon la présente invention est particulièrement avantageux dans la mesure où son fonctionnement est parfaitement satisfaisant dans une gamme très large du taux d'impuretés du liquide à filtrer; ce résultat avantageux peut être obtenu en faisant tourner le tambour à paroi latérale filtrante, soit de façon continue et à vitesse lente, soit de façon intermittente, la vitesse de rotation du tambour, dans le premier cas, la fréquence et l'amplitude de ses rotations intermittentes, dans le second cas, pouvant aisément être adaptées au taux d'impuretés du liquide à filtrer. Bien entendu, le dispositif de filtration selon la présente invention évite de renvoyer les impuretés déposées sur une fraction de la surface latérale du tambour, dans le liquide pollué lui-même, lesdites impuretés déposées étant, au contraire, entraînées par une fraction du liquide précédemment filtré, dans la conduite d'évacuation radiale, qui peut déboucher dans un dispositif connu de séparation des impuretés, par exemple un décanteur dans lequel les fractions plus légères que le carburant se concentrent vers le haut, les fractions plus lourdes vers le bas, le carburant ainsi moins pollué étant recyclé à l'entrée du dispositif de filtration, par exemple par une pompe à basse pression. Par rapport aux dispositifs antérieurs de filtration, qui ont été précédemment mentionnés, celui qui fait l'objet de la présente invention présente l'avantage suivant: alors que, dans chacun des dispositifs antérieurement connus, muni d'un tambour tournant à paroi latérale filtrante, seul un secteur d'ouverture angulaire très faible de ladite paroi latérale filtrante subissait, à un instant donné, une opération de nettoyage, tout le reste de la surface de ladite paroi filtrante, c'est-à-dire la presque totalité de cette surface, fonctionnant au même instant en filtre, dans le cas du dispositif de filtration selon la présente invention, une fraction importante, mais limitée, de la paroi latérale filtrante du tambour tournant est, à un instant donné, en phase de filtration, tandis que, au même instant, une autre fraction de ladite paroi filtrante, de surface voisine de la précédente, est en phase de nettoyage, les impuretés n'étant pas, par ailleurs, maintenues en amont du filtre. Par suite, si l'on considère une fraction déterminée de la paroi latérale filtrante du tambour, elle passe successivement par des phases de filtration et de nettoyage de durées voisines, ce qui permet d'éviter les inconvénients, précédemment mentionnés, des dispositifs antérieurs de filtration à tambour tournant.

Dans une forme de réalisation particulièrement avantageuse de l'invention, le tambour tournant est en forme de cylindre de révolution, et le carter fixe, en forme de cylindre à section droite adaptée pour conférer à la chambre annulaire une largeur radiale évolutive telle que, aux forces de pression appliquées aux palettes coulissantes, respectivement au niveau des conduites d'arrivée et d'évacuation radiale et dans la chambre annulaire, il corresponde un couple résultant moteur, appliqué au tambour tournant, toujours de même sens et d'intensité pratiquement indépendante de la position dudit tambour, et proportionnelle à la pression différentielle entre la conduite d'arrivée et la conduite de sortie axiale. Avec cette forme de réalisation, l'énergie motrice nécessaire à la rotation du tambour filtrant est empruntée à l'énergie cinétique du liquide à filtrer, donc, en définitive, à la pompe qui le refoule vers le filtre. La simplification ainsi réalisée est particulièrement appréciable dans le cas d'un dispositif utilisé pour la filtration du carburant destiné à un moteur d'avion. La suppression de la nécessité de prévoir un moteur indépendant pour entraîner le tambour filtrant en rotation se traduit, en outre, par un allégement qui est particulièrement appréciable pour les installations de filtration en aéronautique.

A titre d'exemples, on a décrit ci-dessous et illustré schématiquement au dessin annexé deux formes de réalisation du dispositif de filtration selon la présente invention.

Les figures 1 et 2 représentent la première forme de réalisation, en coupe, respectivement suivant les lignes I-I de la figure 2 et II-II de la figure 1.

La figure 3 illustre l'ensemble d'une installation de filtration équipée de cette première forme de réalisation du dispositif selon la présente invention.

La figure 4 illustre schématiquement la seconde forme de réalisation, par une vue en coupe analogue à celle de la figure 2.

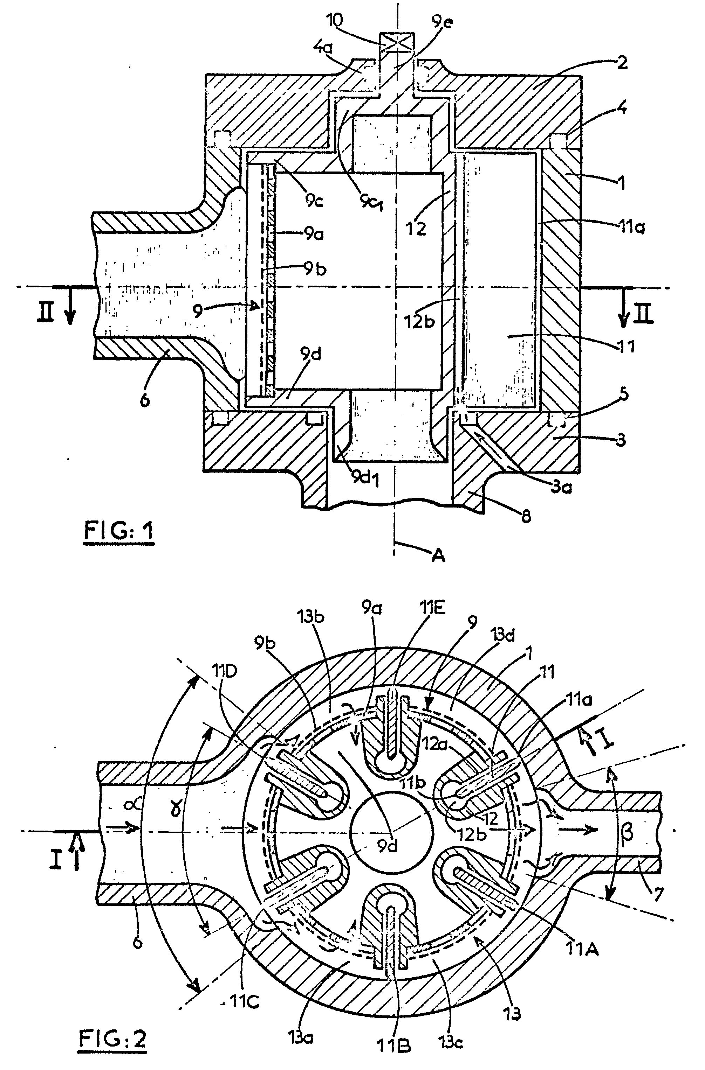

Sur les figures 1 et 2, 1 désigne un carter en forme de cylindre de révolution, dont les deux extrémités, supérieure et inférieure sur la figure 1, sont fermées par des plaques annulaires 2 et 3; des joints toriques 4 et 5 sont insérés entre les bords supérieur et inférieur du carter cylindrique 1 et les plaques annulaires correspondantes 2 et 3, pour assurer l'étanchéité de l'ensemble du carter. Une conduite d'arrivée du liquide à filtrer, 6, et une conduite d'évacuation radiale des impuretés, 7, débouchent à l'intérieur du carter 1; dans l'exemple de réalisation illustré, les deux conduites 6 et 7, par exemple à section intérieure circulaire, ont leurs axes respectifs, horizontaux et alignés l'un avec l'autre, par exemple dans le plan médian horizontal du carter 1. Les débouchés des conduites 6 et 7 dans le carter 1 sont, par ailleurs, épanouis, d'une part dans le plan vertical, pratiquement sur toute la hauteur du carter 1 de façon à distribuer le liquide à filtrer, pour la conduite 6 (comme visible sur la figure 1), ou à recueillir les impuretés arrêtées par le filtre, pour la conduite 7, et, d'autre part, dans le plan horizontal, suivant deux angles $\alpha$ et $\beta$, qui peuvent être différents, comme visible sur la figure 2, mais qui pourraient aussi être égaux. D'autre part, la plaque inférieure 3 est pourvue d'une conduite 8, pour l'évacuation axiale du liquide filtré, dont l'axe peut coïncider avec l'axe vertical, A, du carter cylindrique 1.

Un tambour cylindrique 9, de diamètre extérieur inférieur au diamètre intérieur du carter 1, est d'autre part monté tournant à l'intérieur de ce dernier, coaxialement à son axe vertical A. Dans l'exemple de réalisation illustré, la paroi latérale du tambour 9 est formée par une crépine intérieure 9a, à trous relativement larges, recouverte extérieurement par un filtre fin, 9b, par exemple en toile métallique. La paroi latérale filtrante, 9a—9b, ainsi formée, est par exemple encastrée dans des évidements correspondants aménagés dans deux plaques 9c et 9d, formant respectivement les bases du tambour 9, et solidaires chacune d'un tourillon, faisant saillie à l'extérieur du tambour 9 et coaxial à son axe A. Le tourillon inférieur, $9d_1$, est engagé, de façon à y tourner librement, dans l'embouchure supérieure de la conduite d'évacuation 8, solidaire de la plaque inférieure 3, et ledit tourillon $9d_1$ est lui-même traversé par un canal faisant communiquer ladite conduite 8 avec l'intérieur du tambour tournant 9. Le tourillon supérieur $9c_1$ est monté librement tournant dans un logement cylindrique, aménagé dans la plaque supérieure 2; en outre, dans l'exemple de réalisation considéré, ce tourillon

supérieur, $9c_1$, est pourvu d'un prolongement axial 9e, qui traverse un trou axial de la plaque 2, muni d'un joint 4a, de manière à pouvoir être accouplé à un dispositif moteur (non représenté), à l'extérieur de la plaque 2, par exemple grâce à un carré d'entraînement 10, solidaire du prolongement 9e.

Selon la présente invention, la paroi latérale du tambour tournant 9 est pourvue de palettes radiales coulissantes, 11, dont les bords externes, notamment 11a, sont appliqués de façon pratiquement étanche contre la paroi interne du carter fixe 1; comme visible sur la figure 2, les palettes 11 sont montées coulissantes dans des logements 12a, aménagés eux-mêmes dans des colonnettes 12, qui s'étendent, sans discontinuité, entres les deux pièces 9c et 9d fermant les extrémités du tambour 9; dans la forme de réalisation préférée qui est illustrée au dessin, la disposition est telle que les palettes 11 sont réparties régulièrement sur le pourtour du tambour 9, de façon que leurs plans respectifs forment des angles dièdres $\gamma$ pas trop différents d'$\alpha$ et de $\beta$. Dans l'exemple illustré sur la figure 2, l'angle $\gamma$ est un peu inférieur à l'angle $\alpha$, précédemment défini, si bien que le liquide à filtrer arrivant par la conduite 6, peut contourner les bords externes des palettes 11C et 11D, pour pénétrer dans les chambres annulaires 13a et 13b, délimitées par la paroi latérale du tambour 9, par la paroi interne du carter cylindrique 1, et par les palettes 11B, 11C et respectivement 11D, 11E; par contre, ce liquide est empêché de circuler dans les chambres annulaires 13c et 13d et notamment vers la conduite d'évacuation radiale 7, par les palettes coulissantes 11B et 11E, dont les bords externes sont appliqués de façon étanche contre la paroi interne du carter fixe 1. En revanche comme l'angle $\gamma$ est un peu supérieur à l'angle $\beta$, précédemment défini, le liquide présent dans la partie de la chambre annulaire 13, qui se trouve en regard de la conduite d'évacuation 7, ne peut pas refluer dans lesdites chambres annulaires 13a ou 13b vers la gauche de la figure 2, et notamment vers la conduite d'arrivée 6, car il en est empêché notamment par les palettes coulissantes 11 et 11A. Bien entendu, les valeurs relatives des angles $\alpha$, $\beta$ et $\gamma$ sont matières à options, de même que le nombre des palettes coulissants 11 et l'angle que font éventuellement entre eux les axes des conduites 6 et 7; néanmoins, l'ensemble doit être disposé de manière que, en toute position du tambour tournant 9, les communications directes entre la conduite d'alimentation 6 et la conduite d'évacuation radiale 7 soient interdites par certaines au moins desdites palettes coulissantes.

Dans la forme de réalisation considérée, les moyens prévus pour appliquer les bords externes des palettes coulissantes contre la paroi interne du carter fixe 1 comprennent l'application, sur lesdites palettes, d'efforts s'exerçant dans le sens centrifuge exercé par un fluide sous pression, refoulé dans des chambres 12b, qui sont elles-mêmes formées dans les colonnettes 12 par des épanouissements des logements 12a, autour des bords internes, 11b, des palettes 11. La figure 1 montre que le fluide sous pression est amené dans les chambres 12b par un canal 3a aménagé dans la plaque 3 qui ferme l'extrémité du carter cylindrique 1.

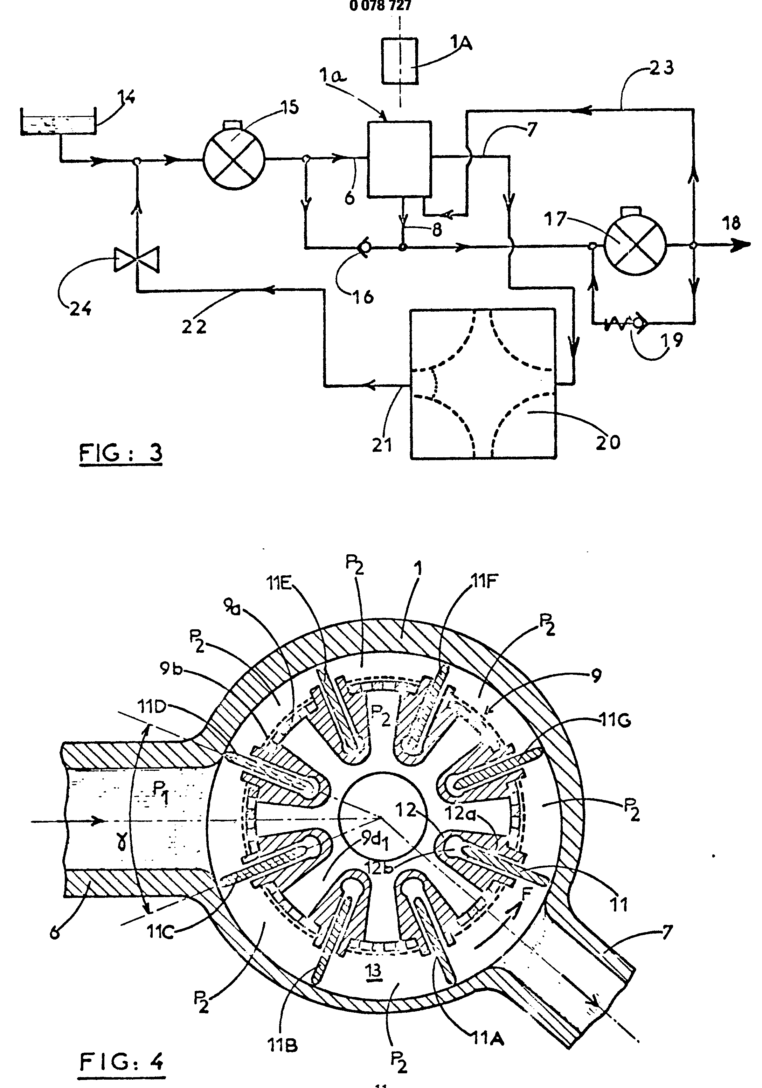

Dans le schéma d'installation de la figure 3, l'ensemble du dispositif de filtration illustré sur les figures 1 et 2 est désigné par 1a; 1A désigne un moteur dont l'arbre est accouplé au tambour 9 (figure 1), par exemple par l'intermédiaire du carré d'entraînement 10. 14 désigne un réservoir de liquide à filtrer, 15 une pompe à basse pression pour le refouler dans la conduite d'entrée 6 du dispositif de filtration 1a; un clapet de by-pass, 16, est inséré entre la conduite d'entrée 6 et la conduite d'évacuation axiale du liquide filtré, 8. Le liquide filtré, arrivant par la conduite 8, est d'autre part envoyé par une pompe à haute pression, 17, vers un circuit d'utilisation 18, non représenté, par exemple le circuit d'alimentation en carburant d'un moteur d'avion. Un clapet de surpression, 19, est également monté en parallèle sur la pompe 17. Enfin, la conduite d'évacuation radiale, 7, du dispositif de filtration 1a est raccordée à l'entrée d'un décanteur 20, dont la sortie 21 est raccordée par une conduite 22 à l'aspiration de la pompe à basse pression 15. Une fraction du liquide sous haute pression qui est refoulé par la pompe 17 est dérivée par une conduite 23 vers le canal 3a (figure 1) du dispositif de filtration 1a.

L'installation illustrée sur la figure 3 fonctionne de la façon suivante: le tambour tournant 9 occupant la position illustrée sur la figure 2, on voit que le liquide, envoyé sous basse pression dans la conduite d'arrivée 6, est distribué sur toute la hauteur de la paroi latérale 9a—9b du tambour tournant 9, et pratiquement sur toute sa moitié gauche (sur la figure 2), si bien que le liquide traverse simultanément les trois sections de la paroi filtrante comprises respectivement entre les palettes coulissantes 11B—11C, 11C—11D et 11D—11E. Le liquide qui a ainsi pénétré, en étant filtré, à l'intérieur du tambour 9 y est ensuite divisé en une fraction principale que la pompe 17 aspire à travers l'alésage intérieur du tourillon inférieur $9d_1$ dudit tambour 9 et la conduite d'évacuation axiale 8, la fraction restante du liquide filtré ressortant dudit tambour 9 à travers la section de sa paroi latérale comprise entre les palettes 11 et 11A, puis s'engageant dans la conduite d'évacuation radiale 7, et aboutissant dans le décanteur 20; une faible dépression peut être créée dans ce dernier par un diaphragme 24 placé sur la conduite de sortie 22 pour aspirer le liquide dans la conduite 7. Le liquide qui traverse la paroi latérale du tambour 9 entre les palettes 11 et 11A entraîne les impuretés qui peuvent souiller cette section du filtre. Les impuretés ainsi entraînées sont séparées du liquide dans le décanteur 20 en forme de double masse inversée, les fractions plus légères que le liquide se concentrant vers le haut et les fractions plus lourdes vers de bas. Le liquide ainsi moins pollué est renvoyé par les conduites 21 et 22 à l'entrée de la pompe à basse pression 15. Une minuterie convenablement réglée peut faire démarrer le moteur 1A, notamment un moteur électrique, lorsque la phase de filtration précédente s'est prolongée pendant une durée suffisante pour donner lieu à un colmatage excessif de la moitié gauche du tambour filtrant, compte tenu du taux d'impuretés du liquide à filtrer et de son débit dans la conduite d'arrivée 6. Le temps de fonctionnement du moteur 1A est choisi par exemple de manière à faire tourner le tambour 9 seulement de l'angle $\gamma$, par exemple dans le sens des aiguilles d'une montre. Ce mouvement du tambour 9 n'interrompt pas l'alimentation de la pompe 17 en liquide épuré, mais a seulement pour effet principal de placer, en regard de l'embouchure de la conduite d'évacuation radiale 7, la section du tambour filtrant comprise entre les palettes 11E et 11; c'est donc cette section, immédiatement suivante, de la paroi filtrante du tambour 9 qui est nettoyée, de la façon précédemment décrite, pendant la phase suivante de filtration, qui a lieu à nouveau à travers trois des sections filtrantes du tambour 9, dont une nouvelle section — comprise entre les palettes 11A et 11B — a été nettoyée au cours d'une phase précédente. Bien entendu, dans cet exemple simple, la durée de chaque phase de filtration, c'est-à-dire l'intervalle de temps entre deux rotations successives du tambour 9, doit être au plus égale au tiers du temps nécessaire pour produire, toutes choses égales d'ailleurs, un colmatage presque complet de la section considérée du tambour filtrant.

La forme de réalisation précédemment décrite présente en outre l'avantage suivant: comme le fluide sous pression, utilisé pour exercer des forces centrifuges sur les palettes coulissantes, telles que 11, de manière à appliquer leurs bords externes de façon étanche contre la paroi interne du carter fixe 1, est constitué par du carburant filtré, il est possible de donner auxdites palettes coulissantes 11 un jeu suffisant dans leurs logements respectifs, 12a, pour que ledit liquide sous haute pression puisse s'échapper de la chambre 12b (figure 2) et circuler dans ledit logement 12a, en lubrifiant et nettoyant les parois latérales de la palette correspondante 11, ledit carburant parvenant finalement dans la chambre annulaire 13, comprise entre le tambour 9 et le carter 1, où il se mélange à nouveau soit avec le carburant à filtrer arrivant par la conduite 6, soit avec le carburant qui a servi au nettoyage d'une section de la paroi filtrante du tambour, et qui sera évacué par la conduite radiale 7. Sur la figure 1, on voit, en outre, que les plaques d'extrémité 9c, 9d du tambour 9, ainsi que leurs tourillons 9cl et 9dl coopèrent avec les surfaces correspondantes des plaques 2 et 3, fermant les extrémités du carter 1, avec des jeux suffisants pour permettre également le passage du carburant filtré, sous haute pression, qui arrive par le canal 3a; des fractions de ce carburant filtré sont donc dérivées à la sortie dudit canal 3a pour aller lubrifier et nettoyer les parties tournantes du tambour 9 et les parties du carter fixe 1 avec lesquelles elles coopèrent. Ces fonctions supplémentaires de nettoyage et de lubrification, assurées par le carburant filtré, envoyé sous haute pression dans le canal 3a, sont d'un extrême intérêt lorsqu'il s'agit de filtrer un carburant très chargé en impuretés, pour éviter certainement tout risque de blocage des palettes coulissantes dans leurs logements et tout grippage du tambour tournant dans ses paliers. Bien entendu les jeux entre plaque 9c et 2 (respectivement 9d et 3) et entre tourillons supérieur (respectivement inférieur) et leur logement, seront suffisants pour assurer cette lubrification et un barrage contre d'éventuelles impuretés mais ils ne devront pas être excessife afin d'éviter des fuites trop importantes et une déperdition d'énergie de la pompe.

La forme de réalisation illustrée sur les figures 1 à 3, et précédemment décrite, est susceptible de nombreuses variantes: les rotations intermittentes du tambour 9, et notamment la mise en marche et l'arrêt de son moteur d'entraînement 1A, peuvent être commandées par un capteur de la pression différentielle entre la conduite d'arrivée 6, du liquide à filtrer, et la conduite de sortie axiale, 8, du liquide débarassé de ses impuretés; en effet, le colmatage progressif des sections du tambour filtrant qui sont en phase de filtration, augmente progressivement ladite pression différentielle, dont l'arrivée à une valeur critique peut par suite être décelée pour déclencher le démarrage du moteur 1A; bien entendu, l'angle de la rotation qu'il communique alors au tambour filtrant 9 peut être prédéterminé par des moyens connus; il serait cependant aussi possible de placer l'arrêt du moteur 1A sous la dépendance du retour de la pression différentielle mentionnée à une valeur suffisamment inférieure à sa valeur critique, caractéristique d'un colmatage partiel du filtre. Par ailleurs, il serait aussi possible, sans sortir du cadre de la présente invention, de faire communiquer au tambour 9, par le moteur 1A, une rotation continue, assez lente cependant pour ne pas perturber la continuité des processus de filtration et de nettoyage du filtre. Bien entendu, un fluide quelconque, sous pression, pourrait être utilisé pour exercer des forces centrifuges appropriées sur les palettes coulissantes; cependant, dans la mesure où ce fluide ne serait pas du carburant filtré, comme précédemment décrit, il serait indispensable qu'il ne puisse pas s'échapper des chambres 12b (figure 2); de toute façon, il ne pourrait absolument pas assurer les fonctions de lubrification et de nettoyage, qui ont été précédemment indiquées. Le moteur 1A, destiné à l'entraînement du tambour tournant 9, peut être d'un type quelconque, mécanique, électrique, hydraulique ou pneumatique.

Dans la forme de réalisation illustrée schématiquement sur la figure 4, le tambour tournant 9 est encore en forme de cylindre de révolution, mais le carter fixe 1 a une section droite adaptée pour conférer à la chambre annulaire 13 une largeur radiale évolutive telle que, aux forces de pression appliquées aux palettes coulissantes telles que 11, respectivement au niveau de la conduite d'arrivée 6, de la conduite d'évacuation radiale 7, ainsi que dans la chambre annulaire 13, il corresponde un couple résultant moteur, $C_m$, appliqué au tambour tournant 9, et toujours de même sens, indiqué par le flèche courbe F sur la figure 4; d'autre part, l'intensité de ce couple moteur est à peu près indépendante de la position du tambour tournant 9, et elle est proportionnelle à la pression différentielle entre la conduite d'arrivée 6 et la conduite de sortie axiale 8.

Comme un calcul simple le montre du reste et comme la demanderesse a pu le vérifier expérimentalement le couple moteur appliqué au tambour 9 est proportionnel à la différence entre la pression, $p_1$, qui règne dans la conduite d'amenée 6, et la pression, $p_2$, qui règne non seulement dans la chambre annulaire 13, mais aussi à l'intérieur du tambour tournant 9 et, par suite, dans la conduite de sortie axiale du liquide purifié (8 sur la figure 1). Lorsque le tambour filtrant, et notamment son filtre fin 9b, est parfaitement propre, cette différence de pression est très faible, de même que le couple moteur $C_m$ appliqué au tambour tournant 9; la différence de pression $(p_1 - p_2)$, de même que le couple moteur $C_m$ augmentent progressivement au fur et à mesure du colmatage du filtre fin 9b par les impuretés du liquide filtré.

Dans une forme de réalisation préférée de la réalisation illustrée sur la figure 4, des moyens sont prévus pour exercer sur le tambour tournant, 9, un couple de freinage, de préférence proportionnel à la pression différentielle $(p_1 - p_2)$ entre la conduite d'arrivée 6 et la conduite d'évacuation axiale (8 sur la figure 1); on peut ainsi parvenir à ce qu'un couple moteur, sensiblement constant, soit appliqué au tambour tournant, ce couple constant pouvant être adapté pour compenser exactement les couples de frottement auxquels est soumis ledit tambour tournant, celui-ci, dans ces conditions, peut alors tourner avec une vitesse sensiblement uniforme, de préférence assez lente, de manière à faire défiler, lentement et successivement, les différentes sections du tambour filtrant, comprises chacune entre deux des palettes coulissantes telles que 11, de sa position de filtrage à sa position de nettoyage, en passant par toutes les positions intermédiaires.

Cependant, de préférence, les moyens de freinage du tambour tournant 9 sont aménagés de façon à ne libérer ledit tambour 9 en rotation que lorsque la pression différentielle $(p_1 - p_2)$ dépasse un seuil prédéterminé. Dans ces conditions, le tambour tournant 9 est immobilisé pendant la majorité du temps, jusqu'à ce que sa section, en position de filtrage (celle comprise entre les palettes 11C et 11D sur la figure 4), soit suffisamment colmatée pour que la pression différentielle $(p_1 - p_2)$ dépasse le seuil prédéterminé et que, par suite, le couple moteur $C_m$, proportionnel à ladite pression différentielle, fasse tourner le tambour 9, de préférence d'un angle $\delta$, voisin ou égal à l'intervalle angulaire $\gamma$ entre deux palettes coulissantes voisines, comme on l'a décrit précédemment à propos des figures 1 et 2.

Bien entendu, le dispositif de filtration selon la figure 4 peut être incorporé dans une installation de filtration du type de celle illustrée sur la figure 3, le moteur indépendant 1A n'étant cependant pas nécessaire dans ce cas. Par contre, il peut être remplacé par un dispositif de freinage, permettant d'obtenir le fonctionnement précédemment décrit.

La présente invention n'est pas limitée à ces deux formes de réalisation; elle englobe toutes leurs variantes et notamment celle par laquelle les efforts dans le sens centrifuge nécessaires pour appliquer les palettes sur le carter sont produits par un système élastique connu en soi.

## Revendications

1. Dispositif de filtration d'un liquide contenant des impuretés diverses, en particulier pour la filtration du carburant destiné à un moteur d'avion, comprenant: — un carter fixe (1) comportant une conduite d'arrivée radiale (6), une conduite d'évacuation axiale (8) et un orifice d'évacuation radiale (7), un tambour (9) à paroi latérale filtrante (9a—9b), monté tournant dans ledit carter fixe (1), qui l'enveloppe, en ménageant une chambre (13) sensiblement annulaire autour de sa paroi latérale (9a—9b), des palettes radiales (11) étant montées coulissantes dans la paroi latérale (9a—9b) dudit tambour tournant (9), de manière que leurs bords externes (11a) soient appliqués de façon étanche contre la paroi interne du carter fixe (1), de manière à délimiter, sur la paroi latérale (9a—9b) dudit tambour (9), au moins une zone active de filtrage, constituant une entrée dudit tambour (9), et au moins une zone de nettoyage, constituant une première sortie radiale dudit tambour (9), les parties intérieures du tambour tournant (9), qui se trouvent dans les secteurs cylindriques respectifs des zones de filtrage et de nettoyage de sa paroi latérale (9a—9b), communiquant librement entre elles, ledit tambour (9) comportant un tourillon inférieur (9dl) à sa base (9d), constituant une seconde sortie, axiale, principale du tambour (9) et des moyens moteurs étant prévus pour faire tourner le tambour (9) de façon que les différentes parties de sa paroi latérale (9a—9b) servent, alternativement et périodiquement, de zone de filtrage et de zone de nettoyage.

2. Dispositif selon la revendication 1, dans lequel les palettes radiales coulissants (11) sont espacées angulairement de façon régulière sur la paroi latérale (9a—9b) du tambour (9).

3. Dispositif selon l'une quelconque des revendications 1 et 2, comportant des moyens (3a— 12b) pour faire exercer, sur les palettes radiales coulissantes (11), des forces centrifuges par un fluide sous pression, de préférence par du carburant filtré, qui est refoulé par une pompe à haute pression (17) dans des chambres (12b) aménagées respectivement dans les guides des palettes radiales coulissantes (11), autour des bords internes (11b) de ces palettes radiales coulissantes (11).

4. Dispositif selon l'une quelconque des revendications 1, 2 et 3, dans lequel le tambour tournant (9) et le carter fixe (1) sont en forme de cylindres de révolution et coaxiaux l'un à l'autre, et les moyens moteurs (1A) sont d'un type à rotation continue lente, ou bient comportent un capteur de la pression différentielle entre la conduite d'arrivée (6) et la conduite d'évacuation axiale (8) de manière à commander des rotations intermittentes, à chaque fois d'un angle de préférence voisin de l'angle ($\alpha$) correspondant au débouché de la conduite d'arrivée (6) dans la chambre annulaire (13).

5. Dispositif selon l'une quelconque des revendications 1, 2 et 3, dans lequel le tambour tournant (9) est en forme de cylindre de révolution, et le carter fixe (1) est en forme de cylindre à section droite adaptée pour conférer à la chambre annulaire (13) une largeur radiale évolutive telle que, aux forces de pression appliquées aux palettes radiales coulissantes (11) respectivement au niveau des conduites d'arrivée et d'évacuation radiale (7) et dans la chambre annulaire (13), il corresponde un couple résultant moteur, appliqué au tambour tournant (9), toujours de même sens et d'intensité à peu près indépendante de la position dudit tambour (9), et proportionnelle à la pression différentielle entre la conduite d'arrivée (6) et la conduite d'évacuation axiale (8).

6. Dispositif selon la revendication 5, comportant moyens pour exercer sur le tambour tournant un couple de freinage variant dans le même sens que la pression différentielle entre la conduite d'arrivée (6) et la conduite d'évacuation axiale (8).

7. Dispositif selon la revendication 6, dans lequel des moyens de freinage du tambour tournant (9) sont aménagés de façon à ne libérer ledit tambour (9) en rotation que lorsque la pression différentielle dépasse un seuil prédéterminé.

**Patentansprüche**

1. Vorrichtung zum Filtrieren einer Flüssigkeit, die verschiedene Verunreinigungen enthält, insbesondere zum Filtrieren von Kraftstoff für einen Flugzeugmotor, die folgende Merkmale aufweist:
ein festes Gehäuse (1) mit einer radialen Einlaßleitung (6), einer axialen Auslaßleitung (8) sowie einer radialen Auslaßöffnung (7),
eine von dem festen Gehäuse (1) umgebene und in ihm drehbar montierte Trommel (9) mit einer als Filter wirkenden Seitenwandung (9a—9b), wobei das Gehäuse (1) eine im wesentlichen ringförmigen Kammer (13) um die Seitenwandung (9a—9b) der Trommel (9) bildet,
radiale Gleitschaufeln (11), die in der Seitenwandung (9a—9b) der drehbaren Trommel (9) verschieblich montiert sind, wobei ihre äußeren Ränder (11a) an der Innenwandung des festen Gehäuses (1) dicht anliegen, so daß sie an der Seitenwandung (9a—9b) der Trommel (9) wenigstens eine aktive Filterzone begrenzen, die einen Einlaß in das Innere der Trommel (9) und wenigstens eine Reinigungszone bilden, die einen ersten aus der Trommel (9) herausführenden radialen Ausgang bildet, wobei die inneren Teile der drehbaren Trommel (9), die sich in den zylindrischen Sektoren der Filterzonen bzw. der Reinigungszone der Seitenwandung (9a—9b) befinden, untereinander frei in Verbindung stehen,
einen an der Basis (9d) der Trommel (9) angeordneten unteren Wellenzapfen (9dl), der einen zweiten axialen Hauptauslaß der Trommel (9) bildet,
sowie Antriebsmittel, durch die die Trommel (9) derart drehbar ist, daß die verschiedenen Teile ihrer Seitenwandung (9a—9b) periodisch und abwechselnd als Filterzone und als Reinigungszone wirken.

2. Vorrichtung nach Anspruch 1, bei der die radialen Gleitschaufeln (11) in regelmäßigen Winkelabständen an der Seitenwandung (9a—9b) der Trommel (9) angeordnet sind.

3. Vorrichtung nach Anspruch 1 oder 2 mit Mitteln (3a—12b) zur Ausübung zentrifugal gerichteter Kräfte auf die radialen Gleitschaufeln (11) mittels eines Druckfluids, vorzugsweise dem gefilterten Kraftstoff, der mittels einer Hochdruckpumpe (17) in Kammern (12b) gefördert wird, die in den Führungen der radialen Gleitschaufeln (11) um deren Innenränder (11b) herum ausgebildet sind.

4. Vorrichtung nach einem der Ansprüche 1, 2 und 3, bei der die drehbare Trommel (9) und das feste Gehäuse (1) die Form von Rotationszylindern haben und koaxial zueinander angeordnet sind und bei der die Antriebsmittel (1A) entweder eine kontinuierliche langsame oder unter dem Steuereinfluß eines ihnen zugeordneten Druckaufnehmers zur Erfassung des Differenzdrucks zwischen der Einlaßleitung (6) und der axialen Auslaßleitung (8) eine intermittierende Drehbewegung der Trommel (9) hervorrufen, und zwar jeweils um einen Drehwinkel, der vorzugsweise zumindest näherungsweise so groß ist wie der Winkel ($\alpha$), der der Mündung der Einlaßleitung (6) in die ringförmige Kammer (13) entspricht.

5. Vorrichtung nach einem der Ansprüche 1, 2 und 3, bei der die drehbare Trommel (9) die Form eines Rotationszylinders besitzt und das feste Gehäuse (1) die Form eines Zylinders hat, dessen Querschnitt so beschaffen ist, daß die radiale Breite der genannten ringförmigen Kammer (13) sich derart erweitert, daß den auf die radialen Gleitschaufeln (11) im Bereich der Einlaß- bzw. der radialen Auslaßleitung (6 bzw. 7) und in der ringförmigen Kammer (13) einwirkenden Druckkräften ein resultierendes Antriebsmoment entspricht, das an der drehbaren Trommel (9) stets in gleicher Richtung und mit einer Intensität angreift, die nahezu unabhängig ist von der Position der Trommel (9) und die dem Differenzdruck zwischen der Einlaßleitung (6) und der axialen Auslaßleitung (8) proportional ist.

6. Vorrichtung nach Anspruch 5 mit Bremsmitteln, die auf die drehbare Trommel ein Bremsmoment ausüben, das sich gleichsinnig mit dem Differenzdruck zwischen der Einlaßleitung (6) und der axialen Auslaßleitung (8) ändert.

7. Vorrichtung nach Anspruch 6, bei der Mittel zum Bremsen der drehbaren Trommel (9) derart angeordnet sind, daß sie die Drehung der Trommel (9) nur dann freigeben, wenn der genannten Differenzdruck einen vorbestimmten Schwellenwert überschreitet.

## Claims

1. An arrangement for filtering a liquid containing various impurities, particularly for the filtration of the fuel intended for an aircraft engine, comprising: a fixed casing (1) having a radial inflow duct (6), an axial discharge duct (8) and a radical discharge opening (7), a drum (9) with filtering side wall (9a—9b) rotatably mounted in said fixed casing (1) which surrounds it, providing a substantially annular chamber (13) around its side wall (9a—9b), radial blades (11) being mounted in the wall (9a—9b) of said rotating drum (9) so as to slide in such a manner that their outer edges (11a) abut in fluid-tight manner against the inner wall of the fixed casing (1) so as to delimit, on the side wall (9a—9b) of said drum (9), at least one active filtering zone, constituting an input of said drum (9), and at least one cleaning zone, constituting a first, radial outflow of said drum (9), the internal parts of the rotating drum (9), which are situated in the respective cylindrical sectors corresponding to the filtration and cleaning zones of its side wall (9a—9b), communicating freely with each other, said drum (9) comprising: a lower journal (9dl) at its base (9d), constituting a second, main, axial outlet of the drum (9); and driving means to effect the rotation of the drum (9) in such a manner that the various section of its side wall (9a—9b) act, alternately and periodically, as filtering and cleaning zones.

2. An arrangement according to claim 1, wherein the sliding radial blades (11) are evenly angularly spaced on the side wall (9a—9b) of the drum (9).

3. An arrangement according to either of claim 1 and 2, comprising means (3a—12b) for causing centrifugal forces to be exerted on the sliding radial blades (11) by a fluid under pressure, preferably filtered fuel, which is delivered by high pressure pumps (17) into chambers (12b) provided respectively in the guides for the sliding radial blades (11) around internal edges (11b) of these sliding radial blades (11).

4. An arrangement according to any one of claims 1, 2 and 3, in which the rotating drum (9) and the fixed casing (1) are in the shape of cylinders of revolution and coaxial one with the other, and the driving means (1A) are of a slow continuous rotation type, or have a sensing device for the differential pressure between the inflow duct (6) and the axial discharge duct (8) so as to control intermittent rotations, each time by an angle preferably close to the angle ($\alpha$) corresponding to the opening of the inflow duct (6) into the annular chamber (13).

5. An arrangement according to any one of claims 1, 2 and 3, in which the rotating drum (9) has the shape of a cylinder of revolution, and the fixed casing (1) has the shape of a straight section cylinder adapted to impart to the annular chamber (13) a progressively varying radial width such that, to the pressure forces applied to the sliding radial blades (11), respectively at the level of the inflow duct (6) and the radial discharge duct (7) and in the annular chamber (13), there corresponds a resultant driving torque, applied to the rotating drum (9), always in the same direction and of an intensity substantially independent of the position of said drum (9) and proportional to the differential pressure between the inflow duct (6) and the axial discharge duct (8).

6. An arrangement according to claim 5, comprising means for exerting on the rotating drum a braking torque varying in the same manner as the differential pressure between the inflow duct (6) and the axial discharge duct (8).

7. An arrangement according to claim 6, wherein braking means for the rotating drum (9) are arranged so as to free said drum (9) for rotation only when the differential pressure exceeds a predetermined threshold.

FIG: 1

FIG: 2

0 078 727

FIG : 3

FIG : 4